Europäisches Patentamt

European Patent Office

Office européen des brevets

(11) Veröffentlichungsnummer: **0 439 680 A2**

# EUROPÄISCHE PATENTANMELDUNG

(21) Anmeldenummer: 90118926.6

(22) Anmeldetag: 04.10.90

(51) Int. Cl.⁵: **B23Q 7/14**, B65G 37/00, B62D 65/00

(30) Priorität: 27.01.90 DE 4002414

(43) Veröffentlichungstag der Anmeldung:
07.08.91 Patentblatt 91/32

(84) Benannte Vertragsstaaten:
AT DE ES FR GB IT SE

(71) Anmelder: **Johann A. Krause Maschinenfabrik GmbH**
**Betonstrasse 31**
**W-2820 Bremen-Farge(DE)**

(72) Erfinder: **Hillgrub, Peter**
**Schumannstrasse 45**
**W-2822 Schwanewede(DE)**
Erfinder: **Kohlmeier, Siegfried**
**Kapitän-Dallmannstrasse 51 a**
**W-2820 Bremen 71(DE)**

(74) Vertreter: **MEISSNER, BOLTE & PARTNER**
**Hollerallee 73**
**W-2800 Bremen 1(DE)**

(54) Verfahren und Vorrichtung zum Transport von Gegenständen entlang einer Fertigungsstrasse.

(57) 2.1. Zur Bildung von Fertigungsstraßen sind zu einzelnen Fertigungsbereichen (21) zusammengefaßte Fertigungsstationen (22) durch eine Förderstrecke (20) verkettet. Die Förderstrecke (20) fördert die auf Werkstückträgern (23) angeordneten Werkstücke mit gleicher Geschwindigkeit von einer Fertigungsstation (22) und einem Fertigungsbereich (21) zum anderen. Die naturgemäß begrenzte Fördergeschwindigkeit auf der Förderstrecke (20) bedingt hohe Nebenzeiten, die durch den Weitertransport der Werkstückträger (23) von einer Fertigungsstation (22) zur anderen entstehen. Solche Fertigungsstraßen sind dadurch unwirtschaftlich.

2.2. Zur Schaffung wirtschaftlicherer Fertigungsstraßen werden zumindest durch den Fertigungsbereich (21) hindurch die Werkstückträger (23) mit einer vorzugsweise höheren Geschwindigkeit weiterbewegt. Eine entsprechende Vorrichtung verfügt dazu über einen Zusatzförderer (24) im Fertigungsbereich (21).

3. Die Erfindung eignet sich besonders für Fertigungsstraßen in der Automobilindustrie, nämlich zur Fertigung bzw. Montage von Motoren oder Getrieben.

Fig. 1

# VERFAHREN UND VORRICHTUNG ZUM TRANSPORT VON GEGENSTÄNDEN ENTLANG EINER FERTI-GUNGSSTRASSE

Die Erfindung betrifft ein Verfahren zum Transport von Gegenständen, insbesondere von auf Werkstückträgern angeordneten Werkstücken, entlang einer mindestens einen Fertigungsbereich aufweisenden Fertigungsstraße sowie eine Vorrichtung gemäß dem Oberbegriff des Anspruchs 9.

Fertigungsstraßen dienen zur Verkettung mehrerer Fertigungsvorgänge. Dazu ist in die Fertigungsstraße mindestens ein Fertigungsbereich integriert, der wiederum vorzugsweise mehrere Fertigungsstationen umfaßt. Die Fertigungsstationen können sowohl zur Bearbeitung als auch zur Montage, Prüfung oder dergleichen von beliebigen Gegenständen dienen. Demzufolge finden an der Fertigungsstraße eine Vielzahl aufeinanderfolgender Bearbeitungs-, Montage- oder Prüfvorgänge bzw. Kombinationen derselben statt.

Auf der Fertigungsstraße werden die zu fertigenden, also zu bearbeitenden, zu montierenden, zu prüfenden oder in sonstiger Weise zu behandelnden Gegenstände durch die Fertigungsstationen einer oder mehrerer Fertigungsbereiche hindurchgefördert. Bei diesen zu fördernden Gegenständen handelt es sich üblicherweise um auf Werkstückträgern (Paletten) angeordnete Werkstücke. Es ist aber auch denkbar, die Werkstücke oder dergleichen unmittelbar, also ohne Werkstückträger, auf der Fertigungsstraße entlangzubewegen. Üblicherweise werden derartige Fertigungsstraßen eingesetzt im Automobilbau, nämlich zur Bearbeitung oder Prüfung von auf Werkstückträgern angeordneten Motoren- oder Getriebeteilen bzw. zur Montage derselben.

Bekannt ist es, die Gegenstände, insbesondere auf Werkstückträgern angeordnete Werkstücke, mittels einer Friktionsrollenbahn auf der gesamten Fertigungsstraße entlangzubewegen. Dadurch erfolgt der Weitertransport der Gegenstände von Fertigungsstation zu Fertigungsstation in dem jeweiligen Fertigungsbereich mit der gleichen Geschwindigkeit als von einem Fertigungsbereich zum anderen. Diese längs der gesamten Fertigungsstraße gleiche Transportgeschwindigkeit der Gegenstände hat zur Folge, daß diese im Fertigungsbereich bzw. in den Fertigungsbereichen sich nicht mit einer auf die Bedürfnisse der Fertigung abgestimmte Geschwindigkeit weitertransportieren lassen.

Hiervon ausgehend liegt der Erfindung die Aufgabe zugrunde, ein Verfahren und eine Vorrichtung der eingangs genannten Art zu schaffen, womit ein den Bedürfnissen entsprechender, insbesondere wirtschaftlicher, Weitertransport der Gegenstände durch vorzugsweise mehrere Fertigungsbereiche gewährleistet ist.

Ein Verfahren zur Lösung dieser Aufgabe weist die Merkmale des Anspruchs 1 auf. Dadurch, daß mindestens durch den Fertigungsbereich bzw. die Fertigungsbereiche hindurch die Gegenstände mit einer anderen Geschwindigkeit weitertransportiert werden als auf den übrigen Abschnitten der Fertigungsstraße, insbesondere zwischen benachbarten Fertigungsbereichen, kann in den Bereichen der Fertigungsstationen ein an die spezifischen Eigenschaften derselben angepaßter Weitertransport der Gegenstände erfolgen.

Zweckmäßigerweise ist die Weitertransportgeschwindigkeit der Gegenstände mindestens durch einen oder auch mehrere Fertigungsbereiche hindurch größer als auf den übrigen Abschnitten der Fertigungsstraße. Dadurch wird die Zeit, die notwendig ist, um die Gegenstände von der einen Fertigungsstation zur anderen Fertigungsstation zu bringen verringert. Das erfindungsgemäße Verfahren verkürzt somit die Gesamtfertigungszeit. Außerdem kommt es zur besseren Auslastung der Fertigungsstationen, was eine wirtschaftliche Massenfertigung zur Folge hat.

Jedoch ist es auch denkbar, die Gegenstände von Fertigungsstation zu Fertigungsstation mit geringerer Geschwindigkeit als in den übrigen Bereichen der Fertigungsstraße weiterzutransportieren. Dieses kann z. B. dann sinnvoll sein, wenn die Nebenzeit benötigt wird um Umrüstarbeiten (einen Werkzeugwechsel) an den Fertigungsstationen vorzunehmen.

Bei einem bevorzugten Verfahren erfolgt der Transport der Gegenstände in den jeweiligen Fertigungsbereich hinein, innerhalb desselben, also von Fertigungsstation zu Fertigungsstation und aus dem Fertigungsbereich heraus mit einer größeren Geschwindigkeit als auf den restlichen Abschnitten der Fertigungsstraße, nämlich insbesondere zwischen benachbarten Fertigungsbereichen. Auf diese Weise wird verhindert, daß sich im Fertigungsbereich bzw. in den Fertigungsbereichen aufgrund der unterschiedlichen Transportgeschwindigkeiten der Gegenstände kein Stau mehrerer zu bearbeitender oder zu montierender Gegenstände bildet oder zumindest die Staustrecke verringert wird.

Gemäß einer vorteilhaften Weiterbildung des Verfahrens werden alle Gegenstände innerhalb des jeweiligen Fertigungsbereichs, in denselben hinein und heraus gleichzeitig mit gleicher (größerer) Geschwindigkeit transportiert, also synchron bewegt. Dadurch sind zum einen Kollisionen benachbarter Gegenstände im jeweiligen Fertigungsbereich ausgeschlossen, während zum anderen sich die Gegenstände mit einem gemeinsamen Förderorgan weiterbewegen lassen.

Weiterhin sieht das erfindungsgemäße Verfahren vor, daß die Gegenstände längs der Fertigungsstraße auf einer durchgehenden Förderstrecke bewegt werden. Auf dieser Förderstrecke werden die Gegenstände von einem Fertigungsbereich zum anderen mit einer (niedrigen) Geschwindigkeit transportiert, wobei durch die Fertigungsbereiche hindurch die Gegenstände zwar auf der Förderstrecke weiterbewegt werden, aber mit einer höheren Geschwindigkeit, indem die Gegenstände von der Förderstrecke entkoppelt werden. Diese Entkopplung geschieht erfindungsgemäß nur bezüglich der Fördergeschwindigkeit, hingegen nicht hinsichtlich der Führung der Gegenstände auf der Förderstrecke. Die Gegenstände bleiben also auch während des Transports mit höherer Geschwindigkeit auf der Förderstrecke.

Schließlich ist verfahrensmäßig vorgesehen, daß der gemeinsame (synchrone) Weitertransport der zum jeweiligen Fertigungsbereich gehörenden Gegenstände durch einen diskontinuierlich hin- und herbewegbaren Zusatzförderer vorgenommen wird. Dieser Zusatzförderer führt nach dem Weiterfördern der Gegenstände in Fertigungsrichtung einen leeren (Rück-)Hub aus, der nach einem weiteren wesentlichen Verfahrensmerkmal ohne Mitnahme der Gegenstände unter denselben hindurch erfolgt. Dieses geschieht zweckmäßigerweise nach einem Abheben der Gegenstände von der Förderstrecke. Dadurch geraten die Gegenstände einerseits außer Kontakt mit dem Zusatzförderer, so daß dieser ohne Mitnahme der Gegenstände den (Rück-)Hub ausführen kann, während andererseits durch das Abheben der Gegenstände von der Förderstrecke eine Indexierung der Gegenstände im Bereich der jeweiligen Fertigungsstation erfolgt.

Eine Vorrichtung zur Lösung der der Erfindung zugrundeliegenden Aufgabe weist die Merkmale des Anspruchs 9 auf. Demnach ist der Förderstrecke mindestens im Fertigungsbereich bzw. in den Fertigungsbereichen und eventuell vor und hinter diesen liegenden Abschnitten der Förderstrecke jeweils ein Zusatzförderer zugeordnet. Diese ermöglichen es, die Gegenstände durch die Fertigungsbereiche hindurch mit einer von der Förderstrecke abweichenden Geschwindigkeit, vorzugsweise einer größeren Geschwindigkeit, weiterzubewegen. Zweckmäßigerweise überlagert der Zusatzförderer die Förderstrecke derart, daß das Tragorgan des Zusatzförderers durch die Förderstrecke gebildet ist, wodurch der Zusatzförderer im wesentlichen nur aus einem antreibbaren Zugmittel gebildet zu werden braucht.

Gemäß einem weiteren Vorschlag der Erfindung ist der Zusatzförderer als diskontinuierlich arbeitender Förderer ausgebildet, indem er vorzugsweise über ein in Förderrichtung hin- und herbewegbares Zugorgan verfügt. Ein derartiges Zugorgan ermöglicht relativ hohe Fördergeschwindigkeiten mit geringen Beschleunigungswegen. Auch ist ein Antrieb eines derart hin- und herbewegbaren Zugorgans mit einfachen Mitteln möglich. Gleichwohl ist es auch denkbar, den Zusatzförderer mit einem diskontinuierlich angetriebenen umlaufenden Zugorgan zu versehen.

Gemäß einer Weiterbildung der mit dem hin- und herbewegbaren Zusatzförderer versehenen Vorrichtung sind beim Vorwärtshub (in Fertigungsrichtung) des Zugorgans die Gegenstände an dieses ankuppelbar und demgegenüber beim Rückwärtshub außer Eingriff zu den Gegenständen bringbar. Zweckmäßigerweise ist dazu der Zusatzförderer mit Kupplungsorganen versehen, die bei auf der Förderstrecke ruhenden Gegenständen an diese ankuppelbar sind. Weiterhin sind die Kupplungsorgane derart ausgebildet, daß ein Kupplungsorgan oder gegebenenfalls auch alle Kupplungsorgane des Zusatzförderers von den zu transportierenden Gegenständen abgekuppelt werden können. Dadurch ist es möglich, die Gegenstände bei Bedarf mit der Transportgeschwindigkeit der Förderstrecke durch eine oder mehrere Fertigungsbereiche an den Fertigungsstationen vorbeizubewegen, wenn in diesen keine Bearbeitung, Montage oder Prüfung der Gegenstände erfolgen soll.

Nach einem weiteren Vorschlag der Erfindung ist dem Fertigungsbereich bzw. den Fertigungsbereichen mindestens eine Hubeinrichtung für die Gegenstände zugeordnet. Zweckmäßigerweise ist die Hubeinrichtung so ausgebildet, daß sie alle in einem Fertigungsbereich befindlichen Gegenstände gleichzeitig von der Förderstrecke anhebt. Durch das Anheben der Gegenstände durch das Huborgan erfolgt einerseits eine Indexierung derselben und andererseits ein Entkoppeln von der Förderstrecke zum Zurückbewegen des Zwischenförderers ohne Mitnahme der (hochbewegten) Gegenstände.

Weitere Unteransprüche beziehen sich auf vorteilhafte konstruktive Ausbildungen der Kupplungsorgane des Zwischenförderers.

Das der Erfindung zugrundeliegende Verfahren wird nachfolgend zusammen mit einem bevorzugten Ausführungsbeispiel der Vorrichtung anhand der Zeichnung näher erläutert. In dieser zeigen:

Fig. 1    eine Seitenansicht eines Teils einer Fertigungsstraße in einem Fertigungsbereich,

Fig. 2    eine Draufsicht auf den Abschnitt der Fertigungsstraße gemäß der Fig. 1,

Fig. 3    einen vergrößert dargestellten Querschnitt III-III durch die Fertigungsstraße der Fig. 1 und 2,

Fig. 4    eine vergrößert dargestellte Seitenansicht analog zur Fig. 1 im Bereich einer den einzelnen Arbeitsstationen zugeordneten Kupplungsklaue,

Fig. 5    eine Draufsicht auf die Kupplungsklaue gemäß der Fig. 4,

Fig. 6    eine Vorderansicht der Kupplungsklaue gemäß der Fig. 4 und 5,

Fig. 7    eine vergrößert dargestellte Seitenansicht gemäß der Fig. 1 im Bereich einer entriegelbaren Kupplungsklaue am Einlauf in einen Fertigungsbereich,

Fig. 8    eine Draufsicht auf die entriegelbare Kupplungsklaue gemäß der Fig. 7,

Fig. 9    eine Vorderansicht der entriegelbaren Kupplungsklaue gemäß der Fig. 7 und 8,

Fig. 10    einen Schnitt X-X durch die entriegelbare Kupplungsklaue der Fig. 8,

Fig. 11    einen vertikalen Querschnitt durch die Förderstrecke im Bereich einer Öffnungseinrichtung,

Fig. 12    eine Draufsicht auf die Förderstrecke im Bereich der Öffnungseinrichtung gemäß der Fig. 11, und

Fig. 13    eine Seitenansicht der Öffnungseinrichtung gemäß der Fig. 11 und 12.

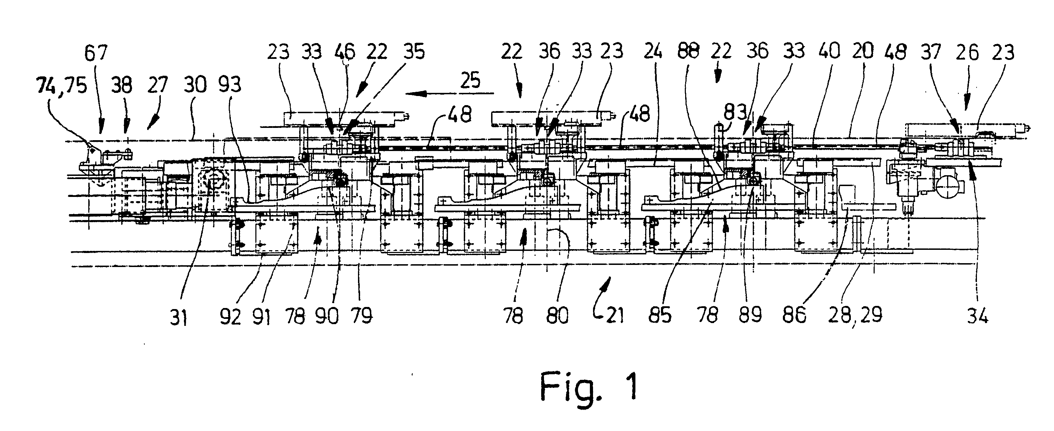

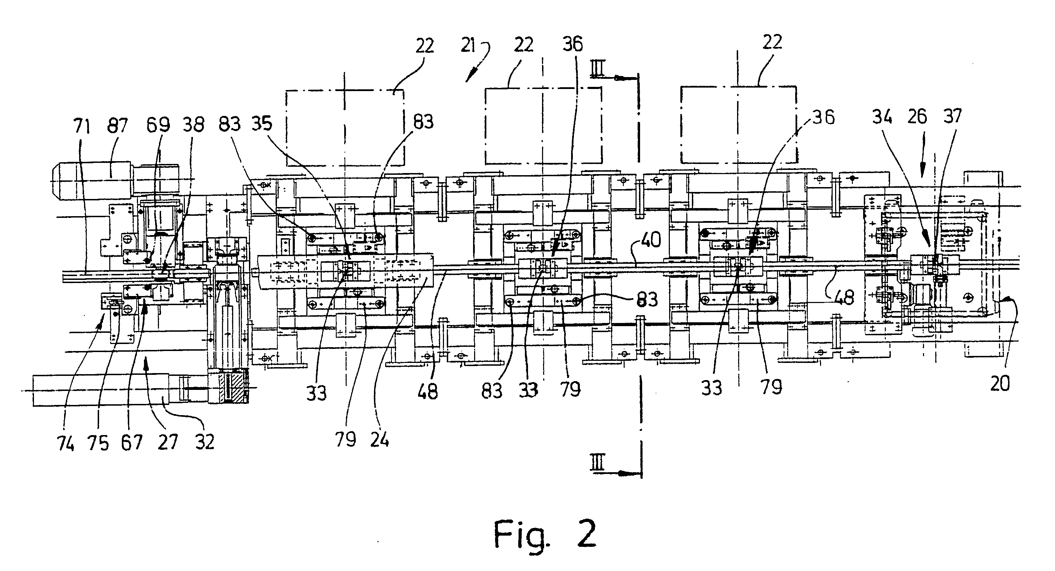

Die gezeigte Vorrichtung dient zur (Teil-)Montage von Motoren oder Getrieben. Hierbei handelt es sich um eine Fertigungsstraße mit einer Förderstrecke 20, die im gezeigten Ausführungsbeispiel durch eine Friktionsrollenbahn bekannter Bauart gebildet ist. An der Förderstrecke 20 sind mit Abstand aufeinanderfolgend mehrere Fertigungsbereiche, also im vorliegenden Falle Montagebereiche, angeordnet, wovon in den Fig. 1 und 2 nur ein Fertigungsbereich 21 dargestellt ist. Jeder Fertigungsbereich 21 verfügt üblicherweise über mehrere Fertigungsstationen, also Montagestationen.

Der gezeigte Fertigungsbereich 21 umfaßt drei mit gleichmäßigem Abstand aufeinanderfolgende Fertigungsstationen 22 (in der Fig. 2 andeutungsweise punktstrichliniert dargestellt). Durch die Förderstrecke 20 werden die Fertigungsbereiche 21 einerseits und die Fertigungsstationen 22 andererseits miteinander verbunden, d. h. in produktionstechnischer Hinsicht miteinander verkettet.

Bei den auf der Förderstrecke 20 zu den Fertigungsbereichen 21 bzw. Fertigungsstationen 22 zu transportierenden Gegenständen handelt es sich im vorliegenden Falle um auf Werkstückträgern 23 angeordnete Werkstücke, nämlich Motorenblöcke oder Getriebegehäuse mit teilweise montierten Motoren- oder Getriebeteilen, die nicht dargestellt sind. Die Werkstückträger 23 mit den darauf angeordneten Werkstücken werden längs der Förderstrecke 20 von der diese bildenden Friktionsrollenbahn bei ständigem Antrieb derselben weiterbewegt, wobei sich vor den einzelnen Fertigungsstationen 22 gegebenenfalls ein Vorrat aus mehreren auf Werkstückträgern 23 angeordneten Werkstücken sammeln kann, der so lange auf der weiterhin angetriebenen Förderstrecke 20 (Friktionsrollenbahn) stillstehend gepuffert wird, bis die Werkstückträger 23 mit den Werkstücken nach und nach in den jeweiligen Fertigungsbereich 21 eingefördert werden.

Erfindungsgemäß ist der Fertigungsstation 22 und gegebenenfalls weiteren nicht dargestellten Fertigungsstationen der Fertigungsstraße ein Zusatzförderer 24 zugeordnet. Der Zusatzförderer 24 verbindet die mit Abstand aufeinanderfolgenden Fertigungsstationen 22 des Fertigungsbereichs 21 und erstreckt sich darüber hinaus über eine in Förderrichtung 25 gesehen vor der ersten Fertigungsstation 22 angeordnete Einlaufstrecke 26 und eine sich an die letzte Fertigungsstation 22 anschließende Ausschubstrecke 27 (Fig. 1 und 2). Der Zusatzförderer 24 verfügt im wesentlichen nur über ein längliches, in Förderrichtung 25 hin- und herbewegbares Zugorgan 28. Als Tragorgan für den Zusatzförderer 24 dient die über den Bereich desselben weiterhin durchgehende Förderstrecke 20, nämlich die Friktionsrollenbahn. Diese übt demnach im Fertigungsbereich 21, der Einlaufstrecke 26 und der Ausschubstrecke 27 nur eine tragende, nicht aber eine antreibende Funktion aus, da diese vom Zugorgan 28 des Zusatzförderers 24 übernommen wird.

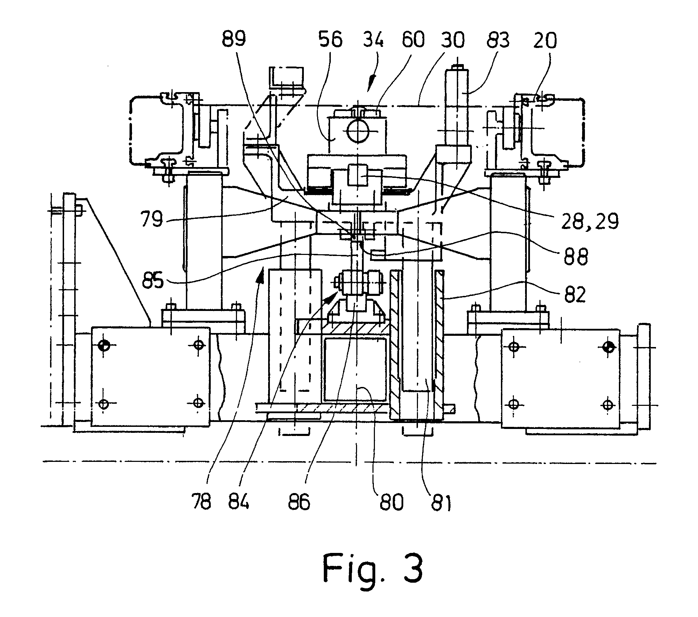

Das Zugorgan 28 besteht im wesentlichen aus einer in Förderrichtung 25 hin- und herbewegbaren Schubstange 29, die abgesehen von der freien Beweglichkeit in und gegen die Förderrichtung 25 ortsfest mittig unterhalb der Förderebene 30 der Förderstrecke 20 angeordnet ist (Fig. 3). In einen Teilbereich ist die Unterseite der Schubstange 29 zahnstangenartig ausgebildet. In diesen zahnstangenartigen Bereich der Schubstange 29 greift ein Ritzel 31 einer an einer Seite neben der Förderstrecke 20 fest angeordneten Antriebseinheit 32 ein. Durch die Antriebseinheit 32, bei der es sich beispielsweise um einen exakt wegsteuerbaren Servoantrieb handeln kann, ist die Schubstange 29 exakt um den Abstand der untereinander gleichmäßig weit voneinander entfernten Fertigungsstation 22 in Förderrichtung 25 unter Mitnahme der Werkstückträger 23 und der darauf angeordneten Werkstücke weiterbewegbar. Der Antrieb der Schubstange 29 erfolgt dabei derart, daß diese sich mit einer größeren Geschwindigkeit in Förderrichtung 25 bewegt als die Werkstückträger 23 mit den Werkstücken von der Friktionsrollenbahn der Förderstrecke 20 außerhalb des Zusatzförderers 24 weiterbewegbar sind. Durch die schnelle Weiterbewegung der Werkstückträger 23 mit den Werkstücken durch den Zusatzförderer 24 werden in den Bereich desselben die Friktionsrollen der Förderstrecke 20 "überholt", also schneller gedreht als dies durch den Antrieb der Friktionsrollenbahn geschieht.

Zur Mitnahme bzw. zum Weitertransport der Werkstückträger 23 mit den darauf angeordneten Werkstücken im Fertigungsbereich 21, der Einlaufstrecke 26 und der Ausschubstrecke 27 sind die auf der Förderstrecke 20 ruhenden Werkstückträger 23 an die Schubstange 29 ankuppelbar. Die Schubstange 29 verfügt dazu an der Oberseite über mehrere in Abstand voneinander angeordnete Kupplungsorgane. Der Abstand der Kupplungspunkte 33 an den Kupplungsorganen entspricht dem Abstand der Fertigungsstation 22 (Fig. 1 und 2).

Die Kupplungsorgane sind erfindungsgemäß unterschiedlich ausgebildet, indem nämlich die in Förderrichtung 25 am Anfang und am Ende des Fertigungsbereichs 21 sich befindenden Kupplungsorgane als entriegelbare Kupplungsklauen 34, 35 ausgebildet sind. Zwischen den entriegelbaren Kupplungsklauen 34, 35 sind als einfache Kupplungsklauen 36 ausgebildete Kupplungsorgane angeordnet. Im gezeigten Ausführungsbeispiel mit drei Fertigungsstationen 22 sind dieses zwei Kupplungsklauen 36. Insgesamt verfügt der hier gezeigte Zusatzförderer 24 demnach über vier Kupplungsorgane (entriegelbare Kupplungsklauen 34, 35 bzw. Kupplungsklauen 36), also ein Kupplungsorgan mehr als Fertigungsstationen 22 im gezeigten Fertigungsbereich 21 vorhanden sind.

Die in Förderrichtung am Anfang des Fertigungsbereichs 21 liegende entriegelbare Kupplungsklaue 34 ist durch die Schubstange 29 zwischen dem Einlaufpunkt 37 der Einlaufstrecke 26 und die in bezug auf die Förderrichtung 25 erste Fertigungsstation 22 hin- und herbewegbar. Die auf der entriegelbaren Kupplungsklaue 34 folgende Kupplungsklaue 36 ist zwischen der ersten und zweiten Fertigungsstation 22 und die zweite Kupplungsklaue 36 zwischen der zweiten und dritten Fertigungsstation 22 hin- und herbewegbar. Schließlich ist die hintere entriegelbare Kupplungsklaue 35 zwischen der dritten Fertigungsstation 22 und dem Auslaufpunkt 38 der Ausschubstrecke 27 verfahrbar.

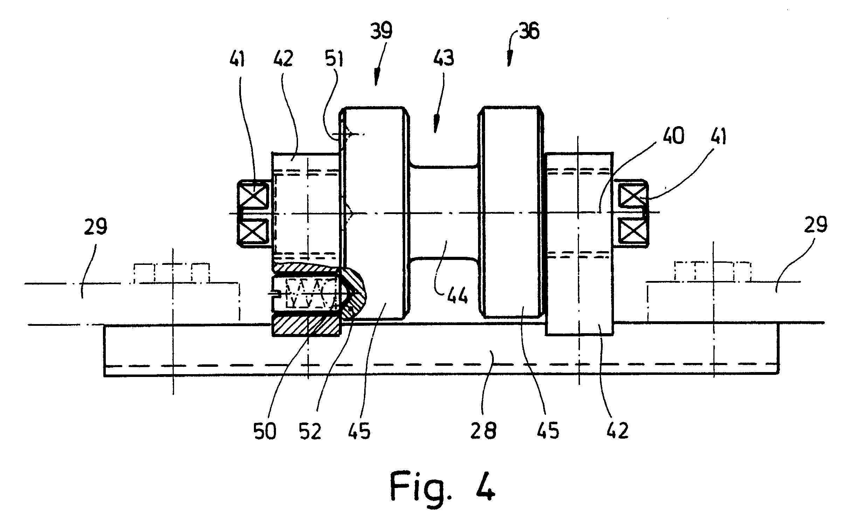

Die Kupplungsklauen 36 verfügen über einen rotationssymmetrischen Kupplungskörper 39, der um eine parallel oberhalb der Schubstange 29 liegende, in Förderrichtung 25 verlaufende Drehachse 40 drehbar ist. Dazu ist der Kupplungskörper 39 mit zwei außenliegenden Lagerzapfen 41 in zwei mit Abstand voneinander gegenüber der Schubstange 29 nach oben vorstehenden Lagerböcken 42 gelagert (Fig. 4 bis 6). Verbunden sind die Lagerzapfen 41 durch ein Kupplungsmittelteil 43, das über einen zylindrischen Mittenabschnitt 44 und zwei diesen nach außen hin begrenzende, gleich ausgebildete Kragenabschnitte 45 verfügt. Dadurch verfügt das Kupplungsmittelteil 43 (quer zur Förderrichtung 25 gesehen) über einen H-förmigen Querschnitt. Von oben her greift zwischen die durch den Mittenabschnitt 44 voneinander beabstandeten Kragenabschnitte 45 ein unter jedem Werkstückträger 23 angeordneter Mitnehmerzapfen 46 in das Kupplungsmittelteil 43 ein zur reibschlüssigen Ankupplung des jeweiligen Werkstückträgers 23 an den Zusatzförderer 24 (Fig. 1).

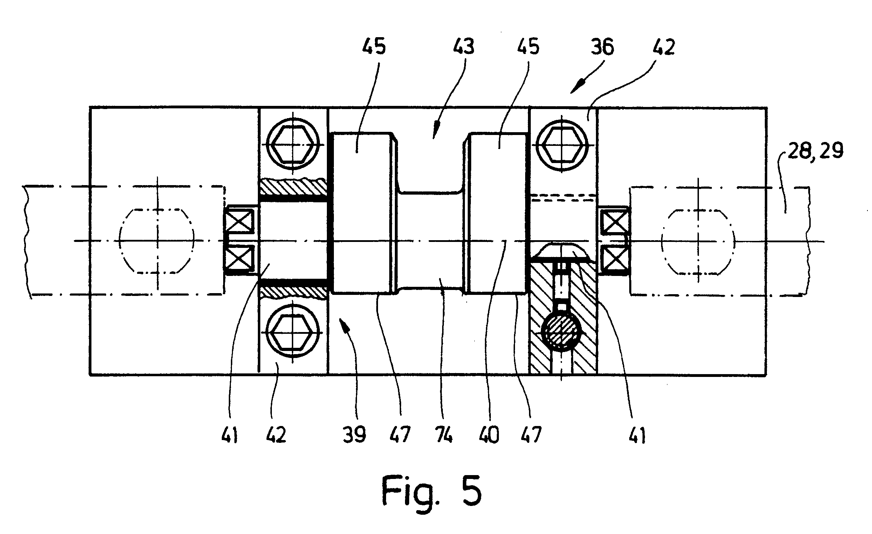

An einer Seite fehlt jedem Kragenabschnitt 45 ein Kreisabschnitt, der bis etwa an den Mittenabschnitt 44 des Kupplungskörpers 39 heranreicht (Fig. 5). Durch entsprechendes Verdrehen des Kupplungskörpers 39 um seine Drehachse 40 können die etwa mit dem Mittenabschnitt 44 bündig abschließenden ebenen Abschnittsflächen 47 der Kragenabschnitte 45 zur Förderebene 30 derart ausgerichtet werden, daß die Abschnittsflächen 47 und der Mittenabschnitt 44 so weit unterhalb der Förderebene 30 liegen, daß die Mitnehmerzapfen 46 unterhalb der Werkstückträger 23 nicht mehr in eine formschlüssige Verbindung mit der Kupplungsklaue 36 bringbar sind und dadurch keine Ankupplung der Werkstückträger 23 an den Zusatzförderer 24 möglich ist. Um alle Kupplungsorgane in eine eine Ankupplung an die Werkstückträger 23 nicht zulassende Stellung zu bringen, sind ihre Kupplungskörper 39 an zueinandergerichteten freien Enden der Lagerzapfen 41 miteinander verbunden durch auf den Drehachsen 40 liegende Schaltwellen 48 (Fig. 1 und 5).

Zur Arretierung der Kupplungskörper 39 in einer eine Verbindung zu den Werkstückträger 23 ermöglichenden Stellung (gemäß der Fig. 4 bis 6) einerseits und einer frei geschalteten Stellung andererseits ist im gezeigten Ausführungsbeispiel einem Lagerbock 42 ein Arretierungsorgan 49 zugeordnet, das eine federbelastete Kugel 50 aufweist, die gegen die zum Lagerbock 42 gerichtete Stirnseite 51 eines entsprechenden Kragenabschnitts 45 drückt und hier formschlüssig in den entsprechenden Arretierungspositionen zugeordneten Vertiefungen 52 in der Stirnseite 51 des Kragenabschnitts 45 eingreift (Fig. 4).

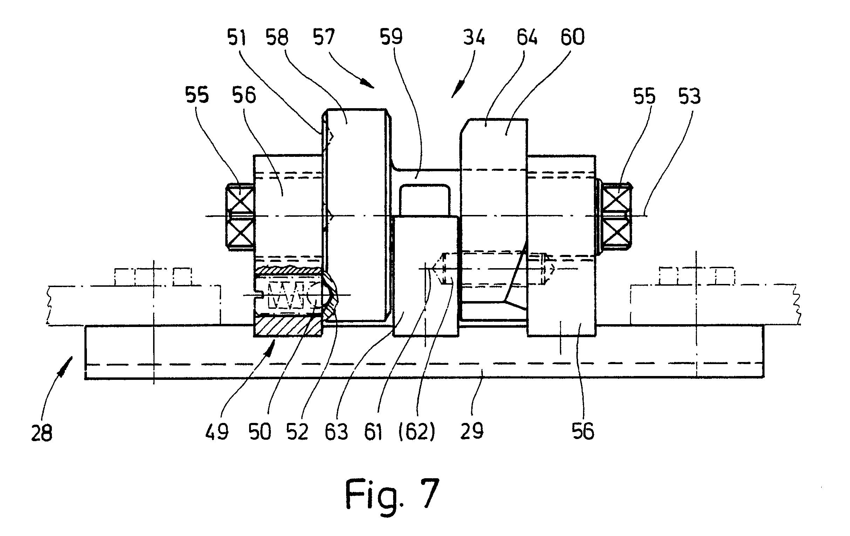

Die entriegelbaren Kupplungsklauen 34 verfügen ebenfalls über einen um eine Drehachse 53 verdrehbaren Kupplungskörper 54. Auch dieser ist mit zwei gegenüberliegenden Lagerzapfen 55 drehbar in zwei mit Abstand voneinander auf der Schubstange 29 angeordneten Lagerböcken 56 gelagert. Insofern entsprechen die entriegelbaren Kupplungsklauen 34, 35 der vorstehend beschriebenen Kupplungsklaue 36. Abweichend hiervon ist jedoch das Kupplungsmittelteil 57 ausgebildet, das nämlich nur über einen Kragenabschnitt 58 und einen im Durchmesser kleineren Mittenabschnitt 59 verfügt. An der dem Kragenabschnitt 58 gegenüberliegenden Seite ist der Mittenabschnitt 59 begrenzt durch zwei schwenkbare Sperrklinken 60 (Fig. 7 bis 9). Die beiden länglichen Sperrklinken 60 sind an gegenüberliegenden Seiten des bis zum entsprechenden Lagerzapfen 41 durchgehenden Mittenabschnitts 59 gelagert, und zwar um unterhalb der Drehachse 53 liegenden Schwenkachse 61. Diese ist gebildet durch jeweils einen Zylinderstift 62, der an einem Ende im entsprechenden Lagerbock 56 und am anderen Ende einen seitlich neben dem Mittenabschnitt 59 angeordneten halbhohen Lagerbock 63 gehalten ist. Mit oberen freien Enden 64 ragen die beiden Sperrklinken 60 gegenüber dem Mittenabschnitt 59 des Kupplungskörpers 54 hervor, so daß (quer zur Förderrichtung 25) gesehen der Kupplungskörper 54 durch seinen einen Kragenabschnitt 58, den Mittenabschnitt 59 und die Sperrklinken 60 ein U-förmiges Profil erhält zur formschlüssigen Aufnahme eines entsprechenden Mitnehmerzapfens 46 eines Werkstückträgers 23 zwischen dem Kragenabschnitt 58 einerseits und den beiden Sperrklinken 60 des Kupplungskörpers 54 andererseits (Fig. 1).

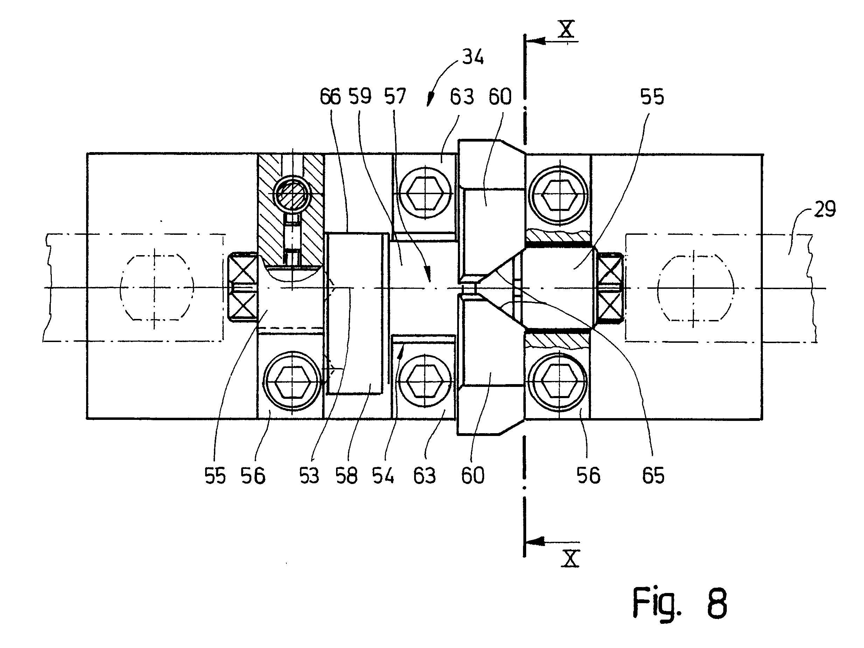

Bei der hier gezeigten entriegelbaren Kupplungsklaue 34 (Fig. 7 bis 9) liegen die Sperrklinken 60 in bezug auf die Förderrichtung 25 vor dem Kragenabschnitt 58. Zum Einlaufen des Mitnehmerzapfens 46 eines an die entriegelbare Kupplungsklaue 34 anzukuppelnden Werkstückträgers 23 in den Bereich des Mittenabschnitts 59 des Kupplungsmittelteils 57 sind die freien Enden 64 beider Sperrklinken 60 mit Anschrägungen 65 versehen. Diese bilden ein in Förderrichtung 25 sich verjüngendes "V" zwischen den freien Enden 64 der Sperrklinken 60 zum selbsttätigen Auseinanderschwenken derselben um ihre Schwenkachsen 61 durch den Mitnehmerzapfen 46 eines einlaufenden Werkstückträgers 23. Auf diese Weise ist eine selbsttätige Ankupplung des jeweiligen Werkstückträgers 23 an eine unbesetzte entriegelbare Kupplungsklaue 34 im Bereich der Einlaufstrecke 26 vor der ersten Fertigungsstation 22 möglich (Fig. 8).

Der einzige Kragenabschnitt 58 des Kupplungskörpers 54 ist wiederum mit einem Kreissegmentabschnitt versehen, verfügt also wie die Kragenabschnitte 45 der Kupplungsklauen 36 über eine Abschnittsfläche 47, die durch ein entsprechendes Verdrehen des Kupplungskörpers 54 und seine Drehachse 53 in eine Ebene unterhalb der Förderebene 30 bringbar ist zum freien Durchlauf der nicht durch den Zusatzförderer 24 weiterzufördernden Werkstückträger 23 an den Kragenabschnitt 58 der entriegelbaren Kupplungsklaue 34 vorbei. Dabei werden wie beim Eintreten des Mitnehmerzapfens 46 eines entsprechenden Werkstückträgers 23 zum Ankuppeln an die entriegelbare Kupplungsklaue 34 die Sperrklinken 60 selbsttätig auseinanderbewegt. Zum "Freischalten" der entriegelbaren Kupplungsklaue 34 mit den übrigen Kupplungsklauen 36 ist die entriegelbare Kupplungsklaue 34 durch eine weitere Schaltwelle 48 mit der in Förderrichtung 25 hierauf folgenden Kupplungsklaue 36 verbunden. Dazu fluchtet die Drehachse 53 der entriegelbaren Kupplungsklaue 34 mit denen der Kupplungsklauen 36. Außerdem sind durch die Schaltwellen 48 die Kupplungsklauen 36 einerseits und die entriegelbare Kupplungsklaue 34 andererseits derart miteinander verbunden, daß die Abschnittsflächen 47 bzw. 66 der Kragenabschnitte 45 und 58 miteinander in einer gemeinsamen Ebene liegen (Fig. 2).

Die im Bereich zwischen der letzten Fertigungsstation 22 und dem Auslaufpunkt 38 der Ausschubstrecke 27 sich bewegende entriegelbare Kupplungsklaue 35 entspricht im grundsätzlichen Aufbau der vorstehend beschriebenen entriegelbaren Kupplungsklaue 34 vor der Fertigungsstation 22. Allerdings ist die entriegelbare Kupplungsklaue 35 gegenüber der Kupplungsklaue 34 um 180° versetzt der Schubstange 29 zugeordnet. Demnach folgen - in Förderrichtung 25 gesehen - auf den Kupplungskörper 54 die beiden Sperrklinken 60. In der entriegelbaren Kupplungsklaue 35 ist der Mitnehmerzapfen 46 eines den Fertigungsbereich 21 verlassenen Werkstückträgers 23 formschlüssig gehalten. Da die gegenüberliegenden Anschrägungen 65 an den Sperrklinken 60 sich V-förmig zum Mittenabschnitt 59 des Kupplungskörpers 54 verjüngen, können die Sperrklinken 60 vom Mitnehmerzapfen 46 nicht selbsttätig geöffnet werden zum Verlassen eines Werkstückträgers 23 bzw. des daran angeordneten Mitnehmerzapfens 46 der entriegelbaren Kupplungsklaue 35.

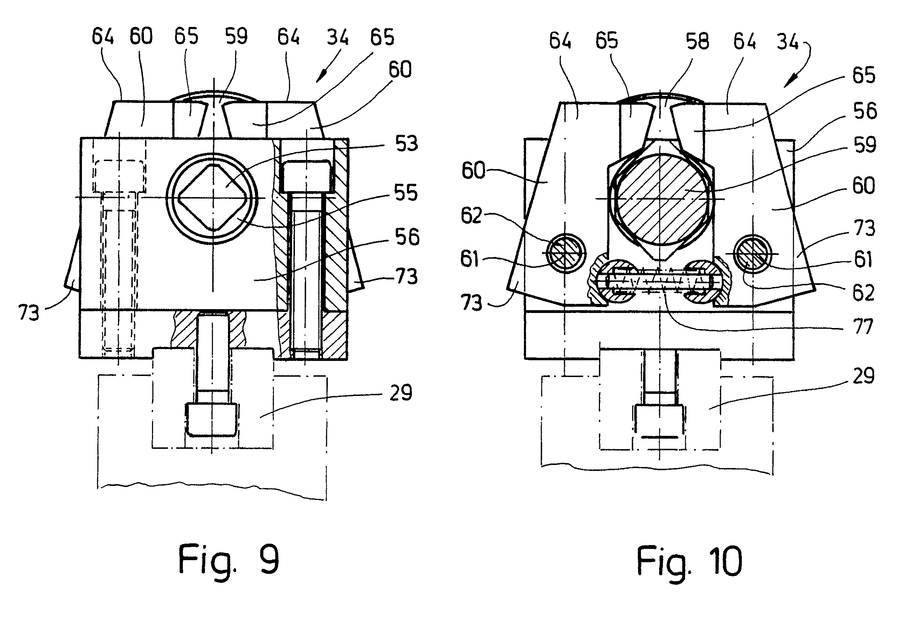

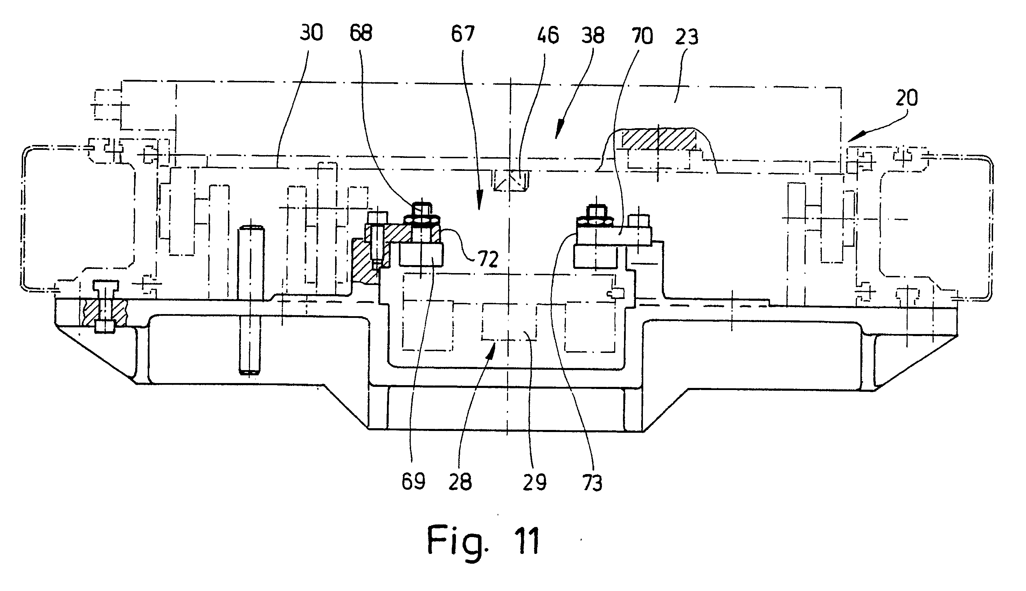

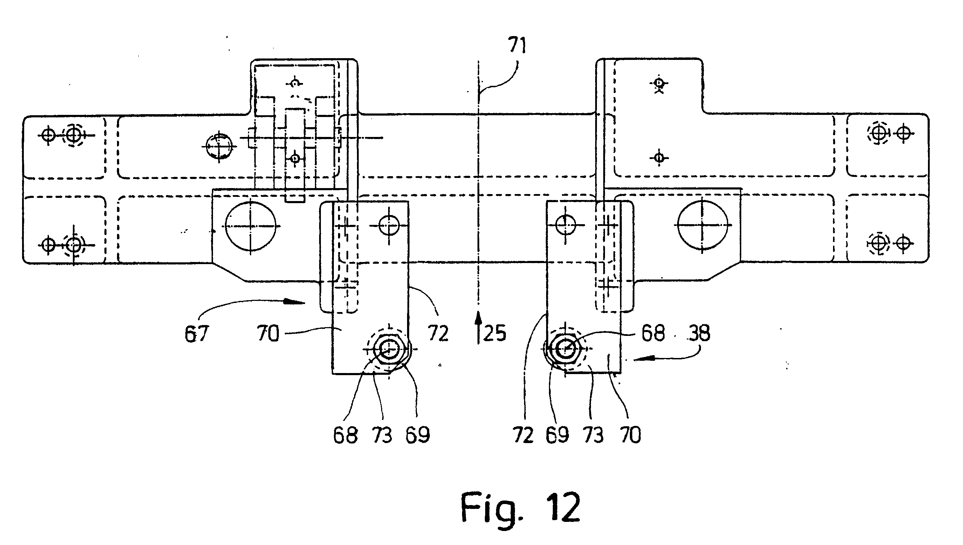

Um die entriegelbare Kupplungsklaue 35 in Förderrichtung 25 öffnen zu können, sind durch eine Öffnungseinrichtung 67 die Sperrklinken 60 gegensinnig verschwenkbar, derart, daß die freien Enden 64 der Sperrklinken 60 sich auseinanderbewegen zum freien Auslauf eines Mitnehmerzapfens 46 des entsprechenden Werkstückträgers 23 aus der entriegelbaren Kupplungsklaue 35. Dazu ist die Öffnungseinrichtung 67 ortsfest an der Förderstrecke 20 hinter dem Fertigungsbereich 21 angeordnet, nämlich mit einem Traggestell der Friktionsrollenbahn verbunden. Die Öffnungseinrichtung 67 besteht aus zwei um eine vertikale Drehachse 68 frei drehbare Rollen 69 und jeweils eine jede Rolle 69 haltende Traglasche 70. Die Rollen 69 sind mit den Traglaschen 70 mit gleichmäßigem Abstand an gegenüberliegenden Seiten einer Längsachse 71 der Förderstrecke 20 am Traggestell fest angeordnet (Fig. 11 bis 13). An einem von der Fertigungsstation 22 in Förderrichtung 25 gesehen weggerichteten Eckbereich jeder Traglasche 70 sind die Rollen 69 derart angeordnet, daß sie gegenüber den einander zugerichteten, parallel zur Längsachse 71 der Förderstrecke 20 verlaufenden Längskanten 72 vorstehen (Fig. 11 und 12). Der lichte Abstand der gegenüberliegenden Rollen 69 ist dabei so bemessen, daß zwischen ihnen die Lagerböcke 56 bzw. der Lagerbock 63 der entriegelbaren Kupplungsklaue 35 frei hindurchbewegbar sind, aber gegenüber den Lagerböcken 56 bzw. 63 vorstehende (untere) äußere Eckabschnitte 73 der Sperrklinken 60 (Fig. 10) Anlage an den Rollen 69 erhalten und beim Vorbeibewegen der entriegelbaren Kupplungsklaue 35 an den Rollen hiervon die äußeren Eckabschnitte 73 in den Bereich der Lagerböcke 56, 63 gedrückt werden zum Verschwenken der Sperrklinken 60 und Öffnen ihrer gegenüberliegenden freien Enden 64. Wenn sich demnach die entriegelbare Kupplungsklaue 35 im Bereich der Öffnungseinrichtung 67 befindet, kann durch die geöffneten Sperrklinken 60 ein Mitnehmerzapfen 46 des entsprechenden Werkstückträgers 23 in Förderrichtung 25 aus der entriegelbaren Kupplungsklaue 35 und somit den Bereich des Zusatzförderers 24 herauslaufen.

Zum selbsttätigen Zusammenbewegen der Sperrklinken 60 in ihre Sperrstellungen nach dem Verlassen der Öffnungseinrichtung 67 ist unterhalb der Schwenkachsen 61 zwischen den Sperrklinken 60 ein Federorgan, nämlich eine Druckfeder 77, angeordnet (Fig. 10). Diese drückt die unteren Enden der gegenüberliegenden Sperrklinken 60 auseinander, so daß die oberen freien Enden 64 derselben sich aufeinanderzubewegen, ohne sich jedoch zu berühren. In dieser Position der Sperrklinken 60 (Fig. 10) wird wiederum ein selbsttätiges Herauslaufen des Mitnehmerzapfens 46 eines entsprechenden Werkstückträgers 23 aus dem Kupplungskörper 54 der entriegelbaren Kupplungsklaue 35 verhindert.

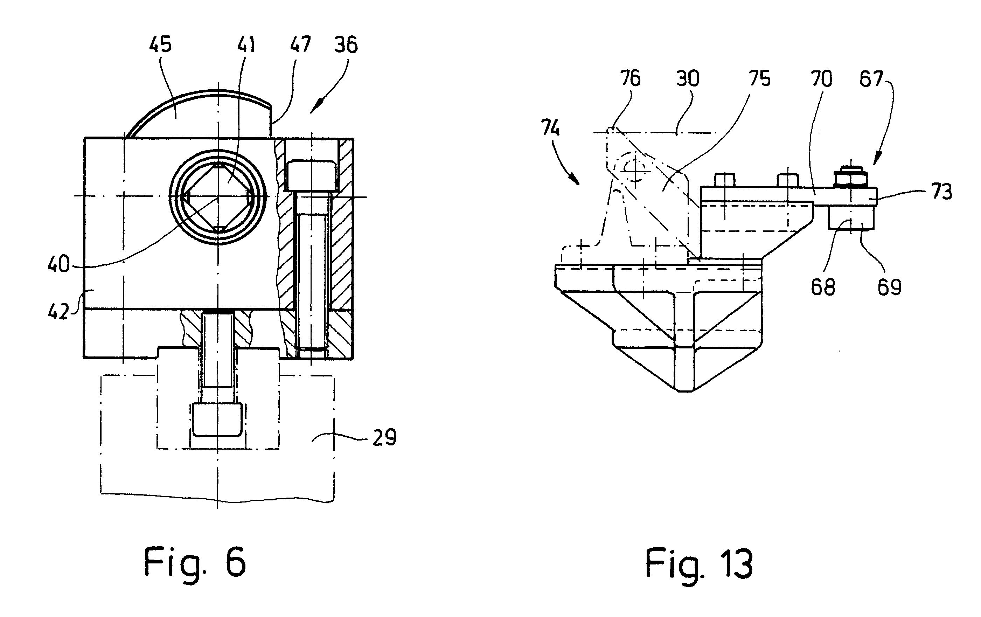

In Förderrichtung 25 folgt auf die Öffnungseinrichtung 67 beim gezeigten Ausführungsbeispiel der Vorrichtung eine Rücklaufsperre 74. Diese ist auch fest mit dem Traggestell der Förderstrecke 20, also der Friktionsrollenbahn, verbunden und verfügt über eine in einer vertikalen Ebene schwenkbare Sperrklinke 75 (Fig. 13). Die Sperrklinke 75 ist in Förderrichtung 25 geneigt, so daß über diese die Werkstückträger 23 in Förderrichtung 25 ungehindert hinwegfahren können, aber an einem Zurücklaufen gegen die Förderrichtung 25 gehindert werden. In diesem Falle kommt eine obere Nase 76 der entgegen der Förderrichtung nicht aus der Förderebene 30 herausschwenkbaren Sperrklinke 75 zur Anlage an einer rückwärtigen Kante des Werkstückträgers 23 (Fig. 13).

Jeder Fertigungsstation 22 ist eine Hubeinrichtung 78 zugeordnet. Bei der gezeigten Vorrichtung sind demnach drei Hubeinrichtungen 78 vorhanden. Der Abstand der Hubeinrichtungen 78 zueinander entspricht dem Abstand der Fertigungsstation 22 im Fertigungsbereich 21. Durch die Hubeinrichtungen 78 sind die Werkstückträger 23 mit darauf befestigten Werkstücken aus der Förderebene 30 herausbewegbar, werden nämlich von der Förderstrecke 20 abgehoben (Fig. 1). Gleichzeitig werden die Werkstückträger 23 durch die Hubeinrichtung 78 exakt vor der jeweiligen Fertigungsstation 22 indexiert. In dem von der Förderstrecke 20 abgehobenen Zustand der Werkstückträger 23 kommen ihre Mitnehmerzapfen 46 außer Eingriff mit den Kupplungsklauen 34..36 des Zusatzförderers 24, der dadurch ohne eine Mitnahme der Werkstückträger 23 einen (Rück-)Hub gegen die Förderrichtung 25 um den Abstand zweier Fertigungsstationen 22 ausüben kann und dadurch wiederum in seine Ausgangsposition gelangt.

Gebildet wird jede Hubeinrichtung 78 durch einen starren Tragrahmen 79, der quer zur Förderrichtung auf einer vertikalen Hubachse 80 auf- und abbewegbar ist. Bei dieser Bewegung wird der Tragrahmen 79 in vertikaler Richtung geführt durch an seiner Unterseite angeordnete Führungssäulen 81, die im wesentlichen spielfrei ausschließlich auf- und abbewegbar in fest mit dem Traggestell der die Förderstrecke bildenden Friktionsrollenbahn verbundenen Führungshülsen 82 (Fig. 3) gelagert sind.

An der Oberseite des Tragrahmens 79 sind im gezeigten Ausführungsbeispiel vier senkrecht hochragende Tragsäulen 83 angeordnet. Diese treten mit einem freien Endbereich in korrespondierend ausgebildete Ausnehmungen an der Unterseite der jeweiligen Werkstückträger 23 bei angehobener Hubeinrichtung 78 ein, wodurch die Werkstückträger 23 einerseits gegenüber der jeweiligen Fertigungsstation 22 genau ausgerichtet, also indexiert werden, und andererseits im von der Förderebene 30 abgehobenen Zustand exakt in einer zur Förderebene 30 parallelen Ebene gehalten werden.

Die Hubeinrichtungen 78 sind gleichzeitig durch ein entsprechendes Huborgan heb- und senkbar. Das Huborgan 84 wird gebildet durch eine etwa mittig unter jedem Tragrahmen 79 angeordnete (geradlinige) Steuerkurve 85. Sämtliche (drei) Steuerkurven 85 sind in Förderrichtung mit Abstand hintereinanderliegend unterhalb der Förderebene 30 der Förderstrecke 20 angeordnet und durch eine unterhalb der Längsachse 71 der Förderstrecke 20 in Förderrichtung 25 hin- und herbewegbare Steuerstange 86 miteinander verbunden (Fig. 1 und 3). Die Steuerstange 86 wird ähnlich wie die Schubstange 29 des Zusatzförderers 24 über einen Zahnstangenantrieb von einer weiteren Antriebseinheit 87 diskontinuierlich angetrieben.

An der profilierten Oberseite 88 jeder Steuerkurve 85 stützt sich ein unterhalb des Tragrahmens 79 jeder Hubeinrichtung 78 angeordnetes Tastrad 89 ab (Fig. 3). Dieses Tastrad 89 fährt beim Hin- und Herbewegen der Steuerkurve 85 das Profil derselben, also die Oberseite 88, ab, wobei der jeweilige Tragrahmen mit dem darauf indexierten Werkstückträger 23 und dem darauf festgespannten Werkstück entsprechend angehoben oder abgesenkt wird. Dazu wird das Profil der Steuerkurve 85 aus im wesentlichen vier Teilbereiche gebildet, nämlich (in Förderrichtung 25 aufeinanderfolgend) einen horizontalen Hubhaltebereich 90, der die maximal hochgefahrene Position der Werkstückträger 23 definiert, einen schräggerichteten Hebe- bzw. Senkbereich 91, einen im wesentlichen horizontal verlaufenden Anfahrbereich 92 und einen die tiefste Stelle der Steuerkurve 85 definierenden, wiederum etwa horizontalen Ruhebereich 93. Letzterer bestimmt die am weitesten abgesenkte Position der Hubeinrichtung 78, bei dem die Spitzen der auf dem Tragrahmen 79 befestigten Tragsäulen 83 unterhalb der Förderebene 30 der Förderstrecke 20 liegen, also ein ungehindertes Hinwegbewegen der Werkstückträger 23 über die Hubeinrichtungen 78 hinweg ermöglichen.

Im gezeigten Ausführungsbeispiel sind die Profile sämtlicher Steuerkurven 85 gleich ausgebildet. Dadurch sind die Hubeinrichtungen 78 synchron in gleichem Maße heb- und senkbar. Alternativ ist es denkbar zur Anpassung an unterschiedliche Bearbeitungshöhen aufweisende Fertigungsstationen 22 die Steuerkurven 85 mit unterschiedlichen Profilen zu versehen. Auch ist es gegebenenfalls möglich, die Steuerkurven 85 mit einem Abstand zueinander zu versehen, der von dem der Fertigungsstation 22 abweicht. Dadurch können gegebenenfalls die Huborgane 84 mit den Werkstückträgern 23 beispielsweise nacheinander angehoben werden.

Mit der vorstehend beschriebenen Vorrichtung läuft das erfindungsgemäße Verfahren wie folgt ab:

Auf der Förderstrecke 20 werden Werkstückträger 23 mit darauf befestigten Werkstücken gegebenenfalls von einem vorhergehenden Fertigungsbereich kommend vor den Fertigungsbereich 21 gefördert. Hierzu dient im gezeigten Ausführungsbeispiel eine die Förderstrecke 20 bildende Friktionsrollenbahn. Ein in Förderrichtung 25 dem Fertigungsbereich 21 zugewandter Werkstückträger 23 gelangt so in die Einlaufstrecke 26, wo er an die sich im Einlaufpunkt 37 befindliche entriegelbare Kupplungsklaue 34 selbsttätig angekuppelt wird.

Wenn die drei Fertigungsstationen 22 ihr Montageprogramm beendet haben, werden durch die drei Hubeinrichtungen 78 die bei der Montage darauf ruhenden Werkstückträger 23 so weit abgesenkt, daß die Werkstückträger 23 auf der Förderstrecke 20 aufliegen und die Hubeinrichtungen 78 so weit unter den Werkstückträgern 23 wegtauchen, daß die Spitzen ihrer Tragsäulen 83 unterhalb der Förderebene 30 liegen. Die Werkstückträger 23 sind dadurch frei bewegbar auf der Förderstrecke 20.

Das Herunterfahren der Hubeinrichtungen 78 geschieht dadurch, daß alle drei durch die Steuerstange 86 verbundenen Steuerkurven 85 entgegen der Förderrichtung 25 durch die Antriebseinheit 87 verschoben werden, und zwar so weit, bis die Tasträder 89 unter den Tragrahmen 79 der Hubeinrichtungen 78 sich in den jeweiligen Ruhebereichen 93 der Steuerkurven 85 befinden.

Durch das Absenken der Werkstückträger 23 auf die Förderstrecke 20 werden automatisch die Mitnehmerzapfen 46 der Werkstückträger 23 in die beiden Kupplungsklauen 36 und die am Ende des Fertigungsbereichs 21 sich befindende entriegelbare Kupplungsklaue 35 eingekuppelt. Danach sind insgesamt vier Werkstückträger 23 über die Kupplungsklauen 34..36 an den Zusatzförderer 24 angekuppelt. Über die Antriebseinheit 32 und die Schubstange 29 werden nun alle Kupplungsklauen 34..36 mit den Werkstückträgern 23 um den Abstand von einer Fertigungsstation 22 zur anderen weitergefahren, und zwar erfindungsgemäß mit einer höheren Geschwindigkeit als auf der Förderstrecke 20, da die Friktionsrollenbahn der Förderstrecke 20 mit einer geringeren Geschwindigkeit angetrieben wird als der Zusatzförderer 24.

Durch das Vorfahren des Zusatzförderers 24 in Förderrichtung 25 gelangt ein neuer Werkstückträger 23 aus der Einlaufstrecke 26 zur ersten Fertigungsstation 22. Gleichzeitig werden von der ersten und zweiten Fertigungsstation die Werkstückträger 23 um eine Fertigungsstation 22 weiterbewegt, nämlich zur zweiten bzw. dritten Fertigungsstation 22. Schließlich wird der in der ( in Förderrichtung 25 gesehen) letzten Fertigungsstation 23 sich befindende Werkstückträger 23 aus dem Fertigungsbereich 21 heraus in die Ausschubstrecke 27 bewegt, wobei gleichzeitig durch die Öffnungseinrichtung 67 die Sperrklinken 60 der (hinteren) entriegelbaren Kupplungsklaue 35 geöffnet werden zum Weitertransport des entsprechenden Werkstückträgers 23 durch die Friktionsrollenbahn - beispielsweise zum nächsten Fertigungsbereich 21. Dabei wird dieser Werkstückträger 23 durch die Förderstrecke 20 mit geringerer Geschwindigkeit bewegt als dies durch den Zusatzförderer 24 vor und im Fertigungsbereich 21 erfolgt.

Die neu den jeweiligen Fertigungsstationen 22 zugeordneten Werkstückträger 23 werden nun gleichzeitig durch die Hubeinrichtungen 78, nämlich ein in Förderrichtung 25 erfolgendes geradliniges Verfahren der Steuerkurven 85 in Förderrichtung 25, wieder von der Förderstrecke 20 abgehoben auf ein über der Förderebene 30 liegendes Niveau zur Durchführung der entsprechenden Montagevorgänge an den Fertigungsstationen 22. Bei durch die Hubeinrichtungen 78 hochgehobenen Werkstückträgern 23, also etwa während der Montagevorgänge an den Fertigungsstationen 22, erfolgt ein Zurückbewegen des Zusatzförderers 24 mit den daran befestigten nunmehr von den Werkstückträgern 23 entkuppelten Kupplungsklauen 34..36, und zwar wiederum um den Abstand zweier Fertigungsstationen 22 in die Ausgangsstellung. Hierbei ist selbsttätig an die vor dem Fertigungsbereich 21 sich befindende, entriegelbare Kupplungsklaue 34 ein neuer von der Fördersrecke 20 kommender Werkstückträger 23 mit einem entsprechenden Werkstück ankuppelbar.

Sollte es erforderlich sein, daß die Werkstückträger 23 (mit oder ohne Werkstücke) ohne einen Montagevorgang durch den Fertigungsbereich 21 hindurchzufördern sind, erfolgt eine vorzugsweise 90°-Verdrehung der Schaltwellen 48, wodurch die Kupplungskörper 39 bzw. 54 sämtlicher Kupplungsklauen 34..36 derart verdreht werden, daß die Abschnittsflächen 47, 66 etwa parallel unter der Förderebene 30 liegen, und dadurch ohne den Zusatzförderer 24 die Werkstückträger 23 auf der Friktionsrollenbahn der Förderstrecke 20 mit einer dieser entsprechenden Geschwindigkeit weiterbewegt werden, vorzugsweise durch den gesamten Fertigungsbereich 21 hindurch zum nächsten Fertigungsbereich 21 bzw. zum Ende der Förderstrecke 20. In diesem Falle treten weder der Zusatzförderer 24 noch die Hubeinrichtungen 78 in Aktion. Weiterhin befindet sich bei diesem freien Hindurchfahren der Werkstückträger 23 durch den Fertigungsbereich 21 der Zusatzförderer 24 in seiner der Ausgangsposition gegenüberliegenden Mittelstellung, ist also vollständig in Förderrichtung 25 vorgefahren, wodurch die Öffnungseinrichtung 67 die Sperrklinken 60 der (hinteren) entriegelbaren Kupplungsklaue 35 permanent geöffnet hält. Hierdurch können die Werkstückträger 23 auch die entriegelbare Kupplungsklaue 35 ungehindert durchfahren.

**Patentansprüche**

1. Verfahren zum Transport von Gegenständen, insbesondere von auf Werkstückträgern angeordneten Werkstücken, entlang einer mindestens einen Fertigungsbereich aufweisenden Fertigungsstraße, **dadurch gekennzeichnet,**

daß die Gegenstände wenigstens durch den Fertigungsbereich (21) bzw. mehrere Fertigungsbereiche (21) mit einer von der Geschwindigkeit der übrigen Bereiche der Fertigungsstraße abweichenden Geschwindigkeit transportiert werden.

2. Verfahren nach Anspruch 1, dadurch gekennzeichnet, daß die Geschwindigkeit der Gegenstände durch wenigstens einen Fertigungsbereich (21) oder mehrere Fertigungsbereiche (21) größer ist als auf den übrigen Abschnitten der Fertigungsstraße.

3. Verfahren nach Anspruch 1 oder 2, dadurch gekennzeichnet, daß die Gegenstände zu dem Fertigungsbereich (21) bzw. den Fertigungsbereichen (21), durch den Fertigungsbereich (21) oder die Fertigungsbereiche (21) hindurch und aus dem Fertigungsbereich (21) bzw. den Fertigungsbereichen (21) heraus mit einer größeren Geschwindigkeit transportiert werden als auf den restlichen Abschnitten der Fertigungsstraße.

4. Verfahren nach einem oder mehreren der Ansprüche 1 bis 3, dadurch gekennzeichnet, daß vorzugsweise in Fertigungsbereichen (21) mit mehreren Fertigungsstationen (22) alle jeder Fertigungsstation (22) zuzuordnenden Gegenstände zur nächsten Fertigungsstation (22) innerhalb des jeweiligen Fertigungsbereiches (21) gleichzeitig und mit größerer Geschwindigkeit gegenüber anderen Abschnitten der Fertigungsstraße bewegt werden.

5. Verfahren nach Anspruch 1 sowie einem oder mehreren der weiteren Ansprüche, dadurch gekennzeichnet, daß die Gegenstände in und außerhalb des Fertigungsbereichs (21) und gegebenenfalls zwischen benachbarten Fertigungsbereichen (21) auf einer durchgehenden Förderstrecke (20) entlangbewegt werden.

6. Verfahren nach Anspruch 5, dadurch gekennzeichnet, daß im wesentlichen außerhalb des Fertigungsbereichs (21) bzw. der Fertigungsbereiche (21) die Gegenstände von der Förderstrecke (20) unmittelbar weitertransportiert werden und innerhalb des Fertigungsbereichs (21) bzw. der Fertigungsbereiche (21) und gegebenenfalls daran anschließenden Einlaufstrecken (26) und/oder Ausschubstrecken (27) von der Förderstrecke (20) unmittelbar weitertransportiert werden und innerhalb des Fertigungsbereichs (21) bzw. der Fertigungsbereiche (21) sowie gegebenenfalls den Einlaufstrecken (26) und/oder den Ausschubstrecken (27) von der Förderstrecke (20) transportmäßig entkoppelt und (mit höherer) Geschwindigkeit weitertransportiert werden.

7. Verfahren nach Anspruch 1 sowie einem oder mehreren der weiteren Ansprüche, dadurch gekennzeichnet, daß die Gegenstände von der Förderstrecke (20) zur Fertigung (Bearbeitung oder Montage) an den jeweiligen Fertigungsstationen (22) abgehoben werden.

8. Verfahren nach Anspruch 1 sowie einem oder mehreren der weiteren Ansprüche, dadurch gekennzeichnet, daß die Gegenstände mit gegenüber der Förderstrecke (20) größerer Geschwindigkeit durch einen diskontinuierlich antreibbaren, insbesondere hin- und herbewegbaren Zusatzförderer (24) weiterbewegt werden, der mit einem in Förderrichtung (20) verlaufenden Förderhub die Gegenstände längs der Förderstrecke (20) mit größerer Geschwindigkeit von einer Fertigungsstation (22) zur anderen weiterbewegt und bei von der Förderstrecke (20) während der Bearbeitung oder Montage an den Fertigungsstationen (22) abgehobenen Gegenständen (leer) entgegen der Förderrichtung (25) zurückbewegt wird, wobei sowohl der Vor- als auch Rückhub des Zusatzförderers (24) insbesondere dem (gleichen) Abstand zwischen zwei benachbarten Fertigungsstationen (22) entspricht.

9. Vorrichtung zum Transport von Gegenständen, insbesondere von auf Werkstückträgern angeordneten Werkstücken, durch mindestens einen Fertigungsbereich mit vorzugsweise einer durch den Fertigungsbereich oder mehrere Fertigungsbereiche hindurchführenden und gegebenenfalls mehrere Fertigungsbereiche verbindende Förderstrecke, insbesondere zur Durchführung des Verfahrens nach einem oder mehreren der Ansprüche 1 bis 8, dadurch gekennzeichnet, daß die Förderstrecke (20) mindestens in einem Fertigungsbereich (21) wenigstens einen Zusatzförderer (24) aufweist.

10. Vorrichtung nach Anspruch 9, gekennzeichnet durch einen diskontinuierlich arbeitenden Zusatzförderer (24) mit insbesondere einem diskontinuierlich hin- und hergehend antreibbaren Zugorgan (28).

11. Vorrichtung nach Anspruch 9 oder 10, dadurch gekennzeichnet, daß ein Tragorgan des Zusatzförderers (24) durch die Förderstrecke (20), insbesondere eine diese bildende Friktionsrollenbahn, gebildet ist.

12. Vorrichtung nach Anspruch 9 sowie einem oder mehreren der weiteren Ansprüche, dadurch gekennzeichnet, daß der Zusatzförderer (24) zum Weiterfördern während seines Vorhubes (in Förderrichtung 25) an die zu transportierenden Gegenstände (Werkstückträger 23) ankuppelbar ist und beim Rückhub (entgegen der Förderrichtung 25) außer Eingriff zu den Gegenständen (Werkstückträger 23) bringbar ist.

13. Vorrichtung nach Anspruch 12, dadurch gekennzeichnet, daß der Zusatzförderer (24) über Kupplungsorgane (Kupplungsklauen 34..36) verfügt, die mit auf der Förderstrecke (20) aufliegenden Gegenständen (Werkstückträgern 23) in Eingriff bringbar sind, wobei die Abstände der Kupplungsorgane (Kupplungsklauen 34..36) auf den Zusatzförderer (24) vorzugsweise den untereinander gleichen Abständen zwischen einzelnen Fertigungsstationen (22) der Fertigungsbereiche (21) entsprechen.

14. Vorrichtung nach Anspruch 12 oder 13, dadurch gekennzeichnet, daß wenigstens ein Teil der Kupplungsorgane (Kupplungsklauen 34..36) außer Eingriff zu den auf der Förderstrecke (20) ruhenden Gegenstände (Werkstückträger 23) bringbar ist zur Ermöglichung eines Rückhubes (entgegen der Förderrichtung 25) des Zusatzförderers (24) ohne eine Mitnahme einer oder aller Gegenstände (Werkstückträger 23).

15. Vorrichtung nach Anspruch 12 sowie einem oder mehreren der weiteren Ansprüche, dadurch gekennzeichnet, daß in dem Fertigungsbereich (21) bzw. den Fertigungsbereichen (21) die Gegenstände (Werkstückträger 23) zur Entkopplung von den Kupplungsorganen (Kupplungsklauen 34..36) des Zusatzförderers (24) von der Förderstrecke (20) durch mindestens eine Hubeinrichtung (78) abhebbar sind, und vorzugsweise jeder Fertigungsstation (22) eine eigene Hubeinrichtung (78) zugeordnet ist.

16. Vorrichtung nach Anspruch 15, dadurch gekennzeichnet, daß alle Hubeinrichtungen (78) annähernd gleichzeitig heb- und senkbar sind, vorzugsweise durch ein gemeinsames, lineares Huborgan (84).

17. Vorrichtung nach Anspruch 16, dadurch gekennzeichnet, daß das Huborgan (84) im Bereich jeder Fertigungsstation (22) über eine Steuerkurve (85) verfügt und sämtliche Steuerkurven (85) durch eine Steuerstange (86) verbunden sind, die längs zur Förderstrecke (20) hin- und herbewegbar ist.

18. Vorrichtung nach Anspruch 12 sowie einem oder mehreren der weiteren Ansprüche, dadurch gekennzeichnet, daß der Zusatzförderer (24) im Bereich einer vor dem jeweiligen Fertigungsbereich (21) angeordneten Einlaufstrecke (26) über ein als entriegelbare Kupplungsklaue (34) ausgebildetes Kupplungsorgan verfügt, in das von der Förderstrecke (20) jeweils ein in den entsprechenden Fertigungsbereichen (21) einzufördernder Gegenstand (Werkstückträger 23 mit einem oder mehreren Werkstücken) selbsttätig einklinkbar ist.

19. Vorrichtung nach Anspruch 12 sowie einem oder mehreren der weiteren Ansprüche, dadurch gekennzeichnet, daß (in Förderrichtung 25) hinter dem jeweiligen Fertigungsbereich (21) eine Auslaufstrecke (27) angeordnet ist, in der der Zusatzförderer (24) über ein als entriegelbare Kupplungsklaue (35) ausgebildetes Kupplungsorgan verfügt, von dem die auf der Förderstrecke (20) aufliegenden Gegenstände (Werkstückträger 23) abkuppelbar sind, vorzugsweise durch eine die Kupplungsklaue (35) entriegelnde Öffnungseinrichtung (67).

Fig. 1

EP 0 439 680 A2

Fig. 2

Fig. 3

EP 0 439 680 A2

Fig. 4

Fig. 5

EP 0 439 680 A2

Fig. 7

Fig. 8

Fig. 9

Fig. 10

EP 0 439 680 A2

Fig. 11

Fig. 12

Fig. 6

Fig. 13

EP 0 439 680 A2